# EUROPEAN PATENT SPECIFICATION

(11) **EP 3 678 796 B1**
(45) Date of publication and mention of the grant of the patent: **21.07.2021**
(21) Application number: 17790847.2
(22) Date of filing: 08.09.2017
(51) Int. Cl.: B21D 53/26

(54) **METHOD OF MANUFACTURING HUB FOR A NON-PNEUMATIC WHEEL**
METHODE ZUR FERTIGUNG EINER NABE FÜR EIN NICHTPNEUMATISCHES RAD
METHODE POUR PRODUIRE UN MOYEU D'UNE ROUE NON PNEUMATIQUE

(43) Date of publication of application: 15.07.2020
(73) Proprietor: Compagnie Générale des Etablissements Michelin, 63000 Clermont-Ferrand (FR)
(72) Inventor: DELFINO, Antonio, Greenville, South Carolina 29605 (US); BERGUERAND, Philippe, Greenville, South Carolina 29605 (US)
(74) Representative: Casalonga
(86) International application number: PCT/IB2017/055436
(87) International publication number: WO 2019/048913

(56) References cited:
- EP-A2- 1 378 377
- WO-A1-2017/116472
- WO-A2-2009/042460
- DE-A1-102006 023 106
- GB-A- 191 300 929
- US-A- 1 227 852
- US-A1- 2002 003 374

## Description

### HELD OF THE INVENTION

The subject matter of the present invention relates generally to a method of manufacturing a hub for a non-pneumatic wheel.

### BACKGROUND OF THE INVENTION

The pneumatic tire is a known solution for compliance, comfort, mass, and rolling resistance. However, the pneumatic tire has disadvantages in complexity, the need for maintenance, and susceptibility to damage. A device that improves on pneumatic tire performance could, for example, provide more compliance, better control of stiffness, lower maintenance requirements, and resistance to damage.

Non-pneumatic tire or wheel constructions provide certain such improvements. The details and benefits of non-pneumatic tire or non-pneumatic wheel constructions are described in e.g., U.S. Pat. Nos. 6,769,465; 6,994,134; 7,013,939; 7,201,194 and EP 1 378 377 A2. Certain non-pneumatic tire and wheel constructions propose incorporating a resilient, annular shear band, embodiments of which are described in e.g., U.S. Pat. Nos. 6,769,465 and 7,201,194. Such non-pneumatic tire and wheel constructions provide advantages in performance without relying upon a gas inflation pressure for support of the loads applied to the tire or wheel.

In some non-pneumatic constructions, vehicle load is applied to a wheel hub that is connected with an annular shear band through load bearing members in the form of e.g., a web or spoke. These members can transmit the load to the annular shear band through e.g., tension, compression, or both. A layer of tread can be applied to the shear band to provide protection against from the travel surface.

The non-pneumatic wheel may wear or suffer damage during use. For example, the tread may wear, the load bearing members may be cut or nicked, and other effects from usage may occur. For certain constructions, the tread, load bearing members, and annular band may be constructed from various polymeric materials that wear or age from use while the hub may be constructed from one or more metals and could potentially be reused.

However, replacement or repair of the tread or the load bearing members may not be practical or economical. For example, because of the integral construction of the hub and load bearing members, prior non-pneumatic wheels may not be readily amenable to substituting different spokes or an annular band into the non-pneumatic wheel, substituting different hubs into the non-pneumatic wheel, or both. Such a substitution would require e.g., destructive steps to cut or extricate the spoke from the annular band or the hub of the non-pneumatic wheel.

Accordingly, a method of manufacturing a hub for a non-pneumatic wheel having spokes that can be removably attached to the hub would be helpful. Such a method that can utilize relatively inexpensive materials and economical processes would be particularly useful.

### SUMMARY OF THE INVENTION

The present invention provides a method for manufacturing a wheel hub for a non-pneumatic wheel. A sheet of material may be folded, cut, bent, and otherwise processed to form portions of the desired wheel hub. The wheel hub may be connected with an annular band through load supporting members that can be selectively connected and disconnected from the hub. Additional objects and advantages of the invention will be set forth in part in the following description, or may be apparent from the description, or may be learned through practice of the invention.

In one exemplary aspect of the present invention, a method of manufacturing a wheel hub is provided that includes bending a sheet of material into a plurality of precursor elements that repeat along a predetermined direction; attaching the sheet from the bending to an annular member having axial, radial, and circumferential directions such that the precursor elements repeat along the circumferential direction; and cutting each precursor element along the axial direction so as divide each precursor element into pairs of opposing fingers and create a plurality of channels extending along the axial direction. This exemplary method may include shaping each opposing finger so as to form the channels into a predetermined shape along the axial direction.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an exemplary embodiment of a non-pneumatic wheel including an exemplary wheel hub of the present invention.
FIG. 2 illustrates a side view of the exemplary embodiment of FIG. 1.
FIG. 3 is a perspective view of an exemplary non-pneumatic tire may as be used with the exemplary wheel of FIGS. 1 and 2.
FIG. 4 is a perspective view of an exemplary, annular receiver of the present invention.
FIG. 5 is a close-up, side view of a portion of the exemplary annular receiver of FIG. 4 along with the radially-inner ends of exemplary spokes.
FIGS. 6, 7, 8, 9, and 10 depict exemplary steps in a process for manufacturing an exemplary hub of the present invention.
FIG. 11 depicts a close-up, side view of a portion of another exemplary annular receiver along with the radially-inner ends of exemplary spokes.

### DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the appended claims. For instance, features illustrated or described as part of one embodiment, can be used with another embodiment to yield a still further embodiment. Thus, it is intended that the present invention covers such modifications and variations as come within the scope of the appended.

As used herein, the following definitions apply.

Axial direction A refers to a direction parallel to an axis about which a referenced exemplary wheel or tire rotates during use.

Radial direction R refers to a direction perpendicular to axial direction A with radially-outer or radially outward referring to a general direction away from axial direction A, and radially-inner or radially inward referring to a general direction towards axial direction A.

Circumferential direction C refers to a direction defined by defined by the circumference of the wheel or tire, or the direction of rotation the wheel or tire about an axis.

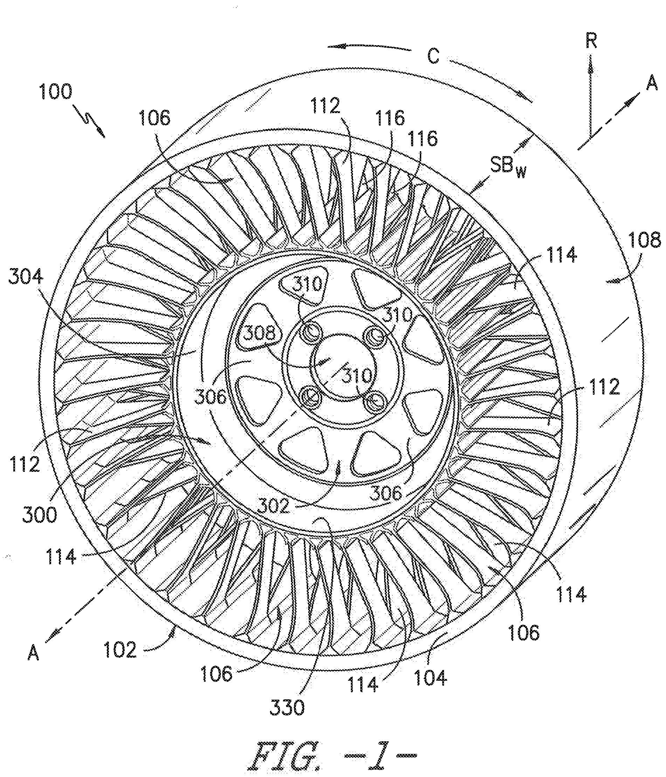

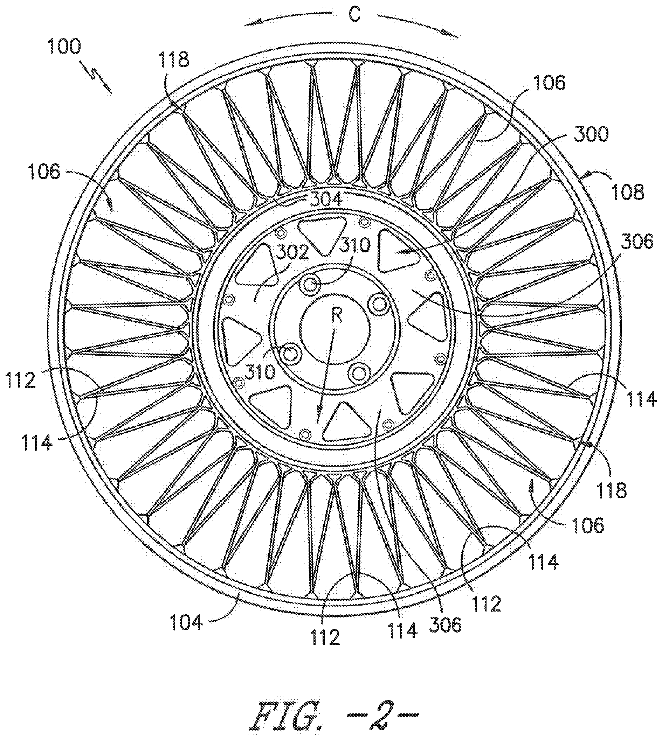

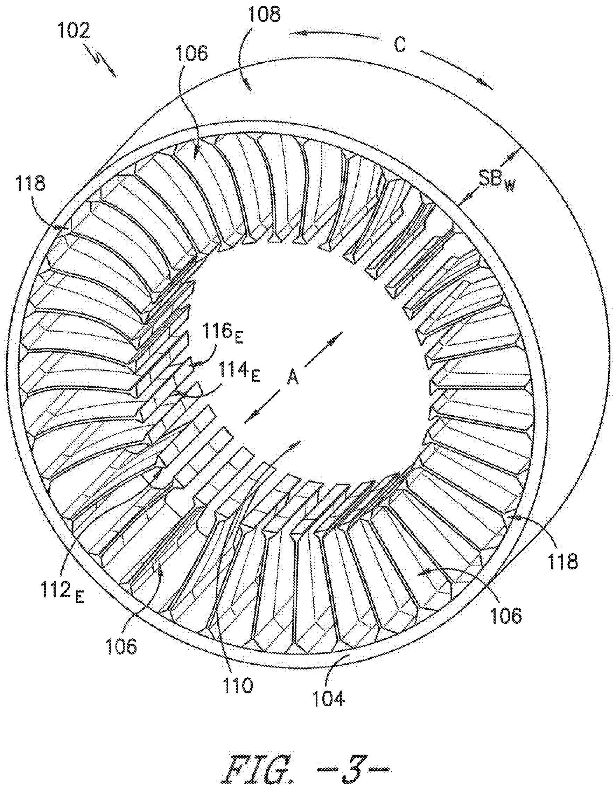

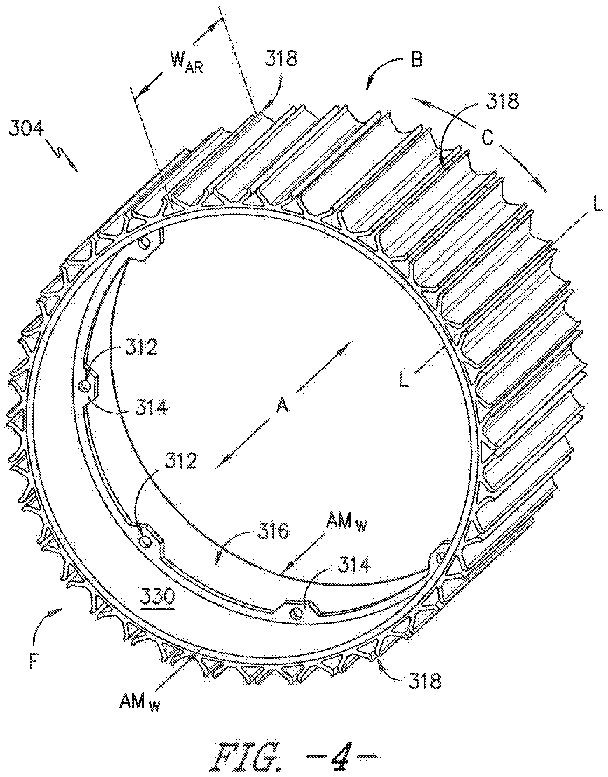

FIGS. 1 and 2 illustrate an exemplary embodiment of a non-pneumatic wheel 100 of the present invention defining radial direction R, circumferential direction C, and axial direction A. Wheel 100 includes a non-pneumatic tire 102 supported on a hub 300, which includes an annular receiver 304 that may be connected with a central portion 302. FIG. 3 depicts non-pneumatic tire 102 without hub 300 positioned in central opening 110. FIG. 4 depicts annular receiver 304 of hub 300 without central portion 302 in place. Annular receiver 304 includes a cylindrically-shaped annular member 330 to which a metal sheet has been attached to in order to create multiple channels 318 as will be further described herein.

Referring now to FIGS. 1, 2, and 3, non-pneumatic tire 102 includes an annular shear band 104 that extends circumferentially around wheel 100 and has an axial width SB_{w}. Tire 102 includes a plurality of load supporting members or spokes 106 that are connected with shear band 102, connected with annular receiver 304 of hub 300, and spaced apart along circumferential direction C as will be further described. Spokes 106 may have other shapes and configurations from what is shown in the figures. For example, although shown as somewhat linear in the figures, spokes 106 may also have a curved shape. In one exemplary embodiment, each spoke 106 is provided with substantially the same curvature along radial direction R (as viewed along axial direction A) so that e.g., spokes 106 may buckle in the same way as they pass through the contact patch. By way of further example, the axial edges of spokes 106 may also be provided with non-linear shapes to provide a profile different from what is shown in the figures.

Central portion 302 of hub 300 is configured for supporting wheel 100 on a vehicle. In this exemplary embodiment, hub 300 includes a plurality of spokes or arms 306 extending radially outward from a centroid 308 (FIG. 1), or from the axis of rotation of hub 300, to annular receiver 304. A plurality of openings 310 allow for insertion of fasteners to secure hub 300 (and thereby non-pneumatic wheel 100) to e.g., an axle of a vehicle. Hub 300 may be e.g., welded to annular receiver 304 or, in an alternative, formed integrally therewith. In still another embodiment, central portion 302 may be secured to receiver 304 using fasteners extending through openings 312 in tabs 314 spaced apart along radially-inner surface 316 of annular receiver 304 as depicted in FIG. 4. The appearance and features of hub 300, and particularly central portion 302, are provided by way of example only and other configurations may be used as well.

Annular shear band 104 may include one or more reinforcing bands, reinforcing plies, shear layers, and other components (not shown). For example, shear band 104 may be constructed with a radially-inner reinforcing band, a radially-outer reinforcing band, and a shear layer positioned therebetween. Shear band 102 provides a stiffness that allows spokes 106 to support hub 300 during use of wheel 100 on a vehicle. At the same time, shear band 102 provides a resiliency or compliance over the ground surface that provides for a smoother, more comfortable ride.

Shear band 102 is depicted in FIGS. 1, 2, and 3, as having a smooth, radially-outer surface 108. However, outer surface 108 may be provided with a tread having e.g., grooves, ribs, blocks, or other features for enhancing traction performance. The tread can be molded directly into outer surface 108 or may be provided as a tread portion wrapped around wheel 100 and attached thereto. Other configurations may be used as well.

As shown in FIGS. 2 and 3, each spoke 106 includes a radially-outer end 118 that is connected with annular shear band 104. Radially-outer end 118 may be attached directly to shear band 104 or indirectly through a ring or feature connected to shear band 104. Spoke 106 may be one continuous piece along radially-outer end 118 or may be separated into portions in other embodiments. For the exemplary embodiment shown, each spoke 106 is constructed from three portions 112, 114, and 116 having radially inner ends 112_{E}, 114_{E}, and 116_{E}, (FIG. 3). Other configurations and constructions may be used as well.

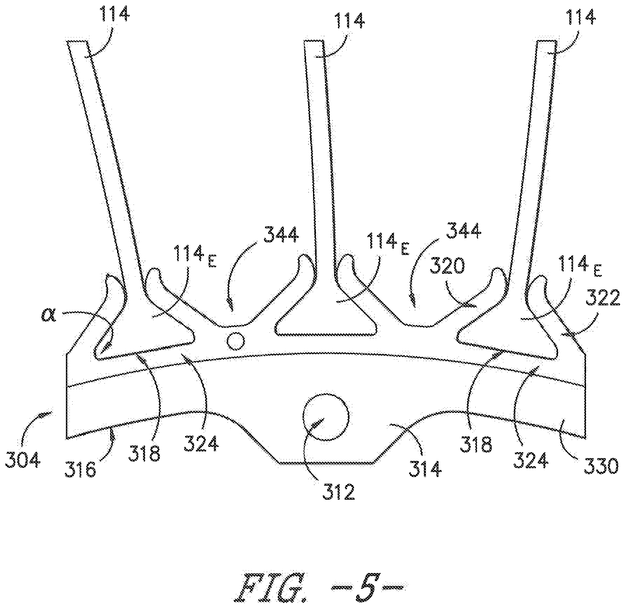

Referring now to FIGS. 4 and 5, annular receiver 304 includes a plurality of channels 318 spaced apart from each other along circumferential direction C. Each channel 318 defines a longitudinal axis L extending parallel to axial direction A. For this exemplary embodiment, each channel 318 is formed by a pair of fingers 320, 322 and bottom 324 that give channel 318 a triangular shape when viewed along axial direction A as shown in FIG. 5. Each finger 320 and 322 forms an acute angle α with bottom 324 in the range of 30 degrees ≤ α ≤ 60 degrees for this exemplary embodiment. As such, channels 318 have a triangular cross-sectional shape configured for complementary receipt of radially-inner ends (such as 112 _{E}, 114_{E}, and 116_{E}) of spokes 106. Other cross-sectional shapes (as view along axial direction A) may be used for channels 318 as will be further discussed herein. For this exemplary embodiment, channels 318 and fingers 320, 322 each maintain a constant profile along the axial width W_{AR} (FIG. 4) between front F and back B of annular receiver 304.

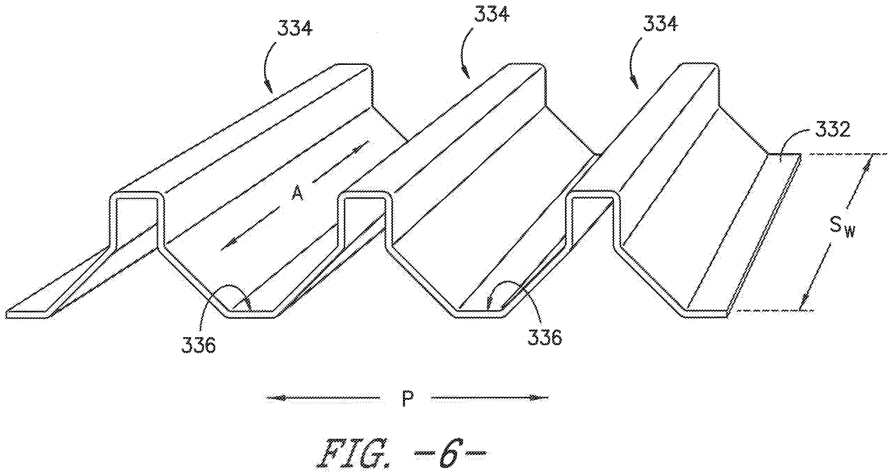

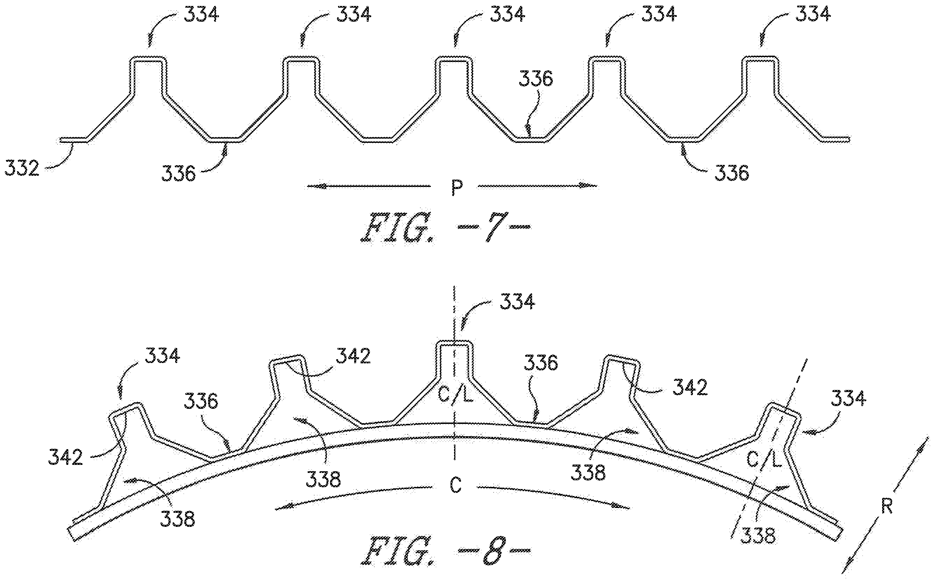

An exemplary method as may be used to manufacture a hub 300 with annular receiver 304 will now be further described with reference to FIGS. 6 through 10. Beginning with FIGS. 6 and 7, a plurality of precursor elements 334 are formed by bending a sheet of material 332 into the predetermined shape of precursor elements 334. Various techniques may be used for such bending including e.g., roll forming, stamping, or others. Sheet 332 be constructed from various materials including e.g., steel. Sheet 332 may have a width S_{W} (FIG. 6) along axial direction A that is the same as width AM_{W} (FIG. 4) along axial direction A of annular member 330. In other configurations, width S_{W} and width AM_{W} may be different.

For this exemplary embodiment, precursor elements repeat along predetermined direction P and have a continuous profile along axial direction A. After forming, each precursor element 334 may have a trapezoidal shape and is connected to adjacent precursor elements by a base 336. The particular shape of precursor element 334 and base 336 shown in the figures is by of example only. Other shapes may also be used depending upon e.g., the shape desired for channels 318. For example, each precursor element could be shaped as a triangle, semi-circle, and other shapes as well.

As shown in FIG. 8, formed sheet 332 is attached to cylindrically-shaped annular member 330, creating a plurality of cavities 338 formed between each precursor element 334 and annular member 330. For example, sheet 332 could be attached to annular member 330 by welding, mechanical fastening, or other means as well. For this exemplary embodiment, each base 336 of sheet 332 is attached to annular member 330. In alternative embodiments, not all of the bases are attached to annular member 330.

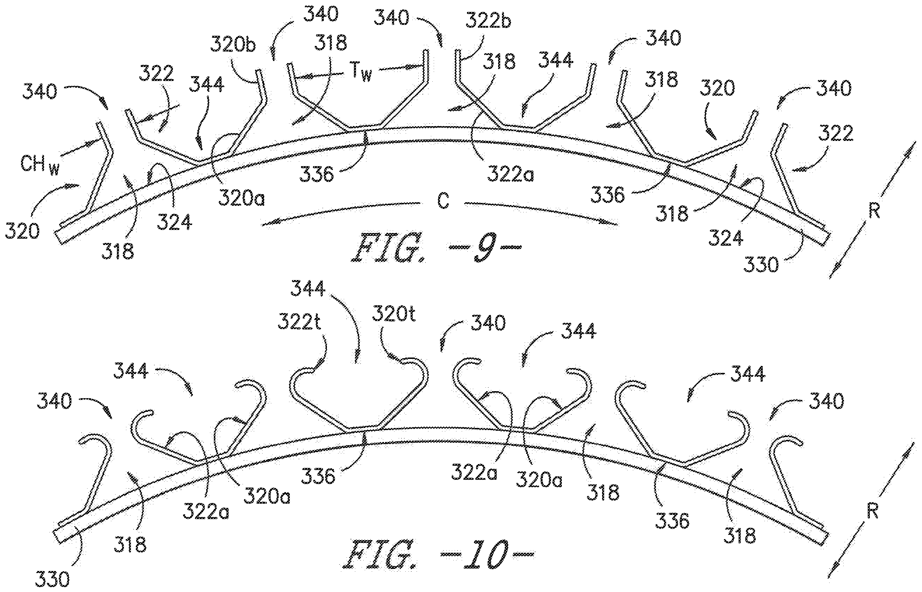

Referring now to FIG. 9, once sheet 332 is attached to annular member 330, precursor elements 334 are cut along axial direction A. For this embodiment, such cutting divides each precursor element 334 into adjacent pairs 340 of opposing fingers 320 and 322. The cutting may be followed by removal of material from sheet 332 forming caps 342 (FIG. 8). Alternatively, all material may be left in place and the cutting may occur along the center-line C/L (FIG. 8) of each precursor element 334. Depending upon e.g., the shape of each precursor element 334, other cutting procedures may also be used in other exemplary aspects of the invention. In other embodiments of the invention, not every precursor element may be cut. For example, precursor elements 334 may be cut intermittently by e.g., cutting every other precursor element 334.

As shown in FIG. 9, the cutting of precursor elements 334 also creates a plurality of channels 318 that extend along axial direction A. Each channel 318 is formed within a precursor element 334 between a pair of opposing fingers 320, 322. In one embodiment of the invention, channels 318 can each receive e.g., one or more ends 112 _{E}, 114_{E}, and 116_{E} of spokes 106. For the embodiment shown in FIG. 9, each channel 318 has a circumferential width CH_{W} that increases along a radially inward direction and matches the profile along axial direction A of spoke ends 112_{E}, 114_{E}, and 116_{E}. Each pair 340 of opposing fingers 320, 322 forms a trough 344 between adjacent pairs 340. As shown, for this embodiment, trough 344 has a circumferential width T_{W} that increases along a radially outward direction.

The shape (as viewed e.g., along axial direction A shown in FIG. 9) of each channel 318 is not limited to what is shown in FIG. 9. For example, a shape for channel 318 such as what is shown in FIGS. 1, 2, and 4 may also be used along with other shapes as well. As will be understood by one of skill in the art, the resulting shape of channel 318 will depend on e.g., how sheet 330 is bent to form precursor elements, how sheet 330 is cut, how fingers 320, 322 are bent, and combinations thereof.

In yet another exemplary aspect of the present invention, fingers 320 and 322 can be further processed to provide additional options for determining the shape of channels 318. Returning to FIG. 9, for this exemplary embodiment, each finger 320 and 322 includes linear segments connected to each other. For example, finger 320 includes linear segments 320a and 320b while finger 322 includes linear segments 322a and 322b. Linear segments 320a and 322a are each attached to base 336. Referring now to FIG. 10, fingers 320 and 322 have been shaped so as to further configure channel 318 into a desired predetermined shape along axial direction A. Specifically, for this embodiment, segments 320b and 322b have each been shaped into a curve so that fingers 320 and 322 of a given pair 340 have tips 320t and 322t pointing away from each other along circumferential direction C. Such shaping provides yet another overall shape for channels 318 along axial direction A.

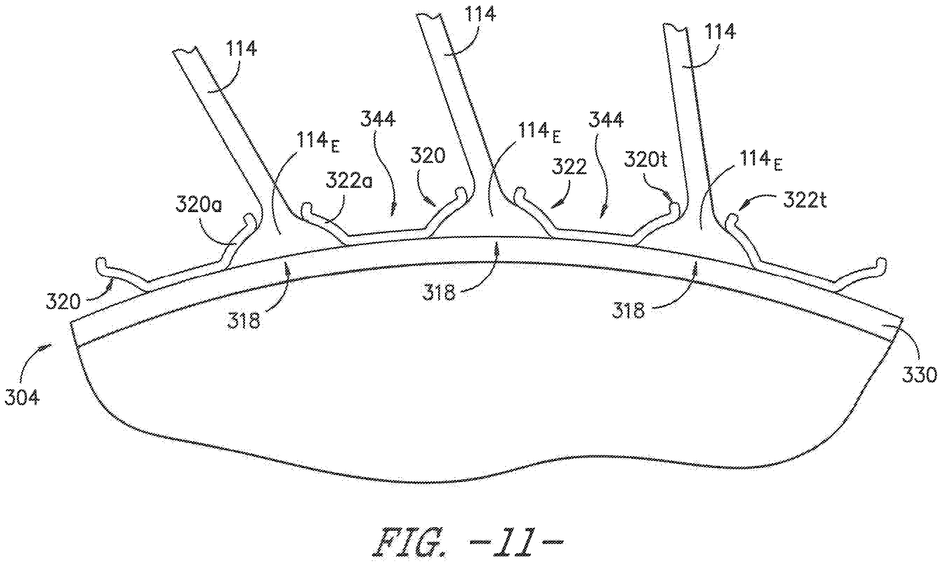

FIG. 11 provides yet another embodiment of hub 300 in which channels 318 have still another overall shape along axial direction A. Here, segments 320a and 322a have an arcuate shape formed by bending or otherwise shaping fingers 320 and 322. In addition, tips 320t and 322t point outwardly along radial direction R. Still other shapes for channel 318 may be used as well.

## Claims

1. A method of manufacturing a wheel hub, the method comprising:
bending a sheet (332) of material into a plurality of precursor elements (334) that repeat along a predetermined direction;
attaching the sheet from the bending to an annular member (330) having axial, radial, and circumferential directions such that the precursor elements repeat along the circumferential direction; and
cutting each precursor element (334) along the axial direction so as divide each precursor element into pairs of opposing fingers (320,322) and create a plurality of channels (318) extending along the axial direction.

2. The method of manufacturing a wheel hub as in claim 1, further comprising shaping each opposing finger (320,322) so as to form the channels (318) into a predetermined shape along the axial direction.

3. The method of manufacturing a wheel hub as in claim 1, wherein each finger (320,322) comprises one or more linear segments (320a,320b), and further comprising shaping at least one linear segment of each finger (320,322) into a curve so that the opposing fingers (320,322) of each precursor element have tips that point away from each other.

4. The method of manufacturing a wheel hub as in claim 1, wherein the bending forms a base (336) in each precursor element (334) for attachment to the annular member (330).

5. The method of manufacturing a wheel hub as in claim 4, wherein the attaching step comprises welding each base (336) to the annular member (330).

6. The method of manufacturing a wheel hub as in claim 1, wherein the attaching step comprises welding the sheet (332) to the annular member (330).

7. The method of manufacturing a wheel hub as in claim 1, further comprising attaching the annular member (330) to a central portion (302) configured for connection to an axle of a vehicle.

8. The method of manufacturing a wheel hub as in claim 1, wherein each finger (320,322) comprises a plurality of linear segments.

9. The method of manufacturing a wheel hub as in claim 1, wherein adjacent pairs (340) of opposing fingers (320,322) form a trough (344) having a circumferential width that increases along a radially-outward direction.

10. The method of manufacturing a wheel hub as in claim 1, wherein each channel (318) has a circumferential width that decreases along a radially-outward direction.

11. The method of manufacturing a wheel hub as in claim 1, wherein the sheet (332) of material comprises metal.

12. The method of manufacturing a wheel hub as in claim 1, wherein the sheet (332) of material has a width along the axial direction that is the same as a width along the axial direction of the annular member.

13. The method of manufacturing a wheel hub as in claim 1, wherein the attaching creates a plurality of cavities (338) between the sheet (332) of material and the annular member (330).

14. The method of manufacturing a wheel hub as in claim 1, wherein the annular member (330) is cylindrically-shaped.

15. The method of manufacturing a wheel hub as in claim 1, wherein each channel (318) created by the cutting is positioned with a precursor element (334).

## Patentansprüche

1. Verfahren zum Herstellen einer Radnabe, wobei das Verfahren umfasst:
Biegen einer Materialtafel (332) zu einer Vielzahl von Vorläuferbauelementen (334), die sich entlang einer vorgegebenen Richtung wiederholen;
Befestigen der Tafel vom Biegen an einem ringförmigen Element (330), das axiale, radiale und Umfangsrichtungen hat, derart dass die Vorläuferbauelemente sich entlang der Umfangsrichtung wiederholen; und
Schneiden jedes Vorläuferbauelementes (334) entlang der axialen Richtung, um so jedes Vorläuferbauelement in Paare von sich gegenüberliegenden Fingern (320,322) zu teilen
und eine Vielzahl von Kanälen (318) zu erzeugen, die sich in der axialen Richtung erstrecken.

2. Verfahren zum Herstellen einer Radnabe nach Anspruch 1, das ferner das Formen jedes gegenüberliegenden Fingers (320,322) umfasst, um so die Kanäle (318) in die vorgegebene Form entlang der axialen Richtung zu bringen.

3. Verfahren zum Herstellen einer Radnabe nach Anspruch 1, wobei jeder Finger (320,322) ein oder mehr lineare Segmente (320a, 320b) umfasst, und das ferner das Formen von mindestens einem linearen Segment jedes Fingers (320,322) zu einer Kurve umfasst, sodass die gegenüberliegenden Finger (320,322) jedes Vorläuferbauelementes Spitzen haben, die voneinander weg zeigen.

4. Verfahren zum Herstellen einer Radnabe nach Anspruch 1, wobei das Biegen eine Basisfläche (336) in jedem Vorläuferbauelement (334) zur Befestigung am ringförmigen Element (330) formt.

5. Verfahren zum Herstellen einer Radnabe nach Anspruch 4, wobei der Befestigungsschritt das Anschweißen jeder Basisfläche (336) am ringförmigen Element (330) umfasst.

6. Verfahren zum Herstellen einer Radnabe nach Anspruch 1, wobei der Befestigungsschritt das Anschweißen der Tafel (332) an das ringförmige Element (330) umfasst.

7. Verfahren zum Herstellen einer Radnabe nach Anspruch 1, das ferner das Befestigen des ringförmigen Elementes (330) an einem Mittelabschnitt (302) umfasst, der für die Verbindung mit einer Achse eines Fahrzeugs ausgelegt ist.

8. Verfahren zum Herstellen einer Radnabe nach Anspruch 1, wobei jeder Finger (320,322) eine Vielzahl von linearen Segmenten umfasst.

9. Verfahren zum Herstellen einer Radnabe nach Anspruch 1, wobei benachbarte Paare (340) von gegenüberliegenden Fingern (320,322) einen Trog (344) bilden, der eine Umfangsbreite hat, die sich entlang einer radial auswärts gerichteten Richtung erhöht.

10. Verfahren zum Herstellen einer Radnabe nach Anspruch 1, wobei jeder Kanal (318) eine Umfangsbreite hat, die sich entlang einer radial auswärts gerichteten Richtung verringert.

11. Verfahren zum Herstellen einer Radnabe nach Anspruch 1, wobei die Materialtafel (332) aus Metall besteht.

12. Verfahren zum Herstellen einer Radnabe nach Anspruch 1, wobei die Materialtafel (332) eine Breite entlang der axialen Richtung hat, die gleich einer Breite entlang der axialen Richtung des ringförmigen Elementes ist.

13. Verfahren zum Herstellen einer Radnabe nach Anspruch 1, wobei das Befestigen eine Vielzahl von Hohlräumen (338) zwischen der Materialtafel (332) und dem ringförmigen Element (330) erzeugt.

14. Verfahren zum Herstellen einer Radnabe nach Anspruch 1, wobei das ringförmige Element (330) zylindrisch geformt ist.

15. Verfahren zum Herstellen einer Radnabe nach Anspruch 1, wobei jeder Kanal (318), der durch das Schneiden erzeugt wurde, bei einem Vorläuferbauelement (334) angeordnet ist.

## Revendications

1. Procédé de fabrication d'un moyeu de roue, le procédé comprenant :
la flexion d'une feuille (332) de matériau en une pluralité d'éléments précurseurs (334) qui se répètent le long d'une direction prédéterminée ;
la fixation de la feuille issue de la flexion à un organe annulaire (330) ayant des directions axiale, radiale et circonférentielle telles que les éléments précurseurs se répètent le long de la direction circonférentielle ; et
la coupe de chaque élément précurseur (334) le long de la direction axiale de manière à diviser chaque élément précurseur en paires de doigts (320, 322) opposés et créer une pluralité de canaux (318) s'étendant le long de la direction axiale.

2. Procédé de fabrication d'un moyeu de roue selon la revendication 1, comprenant en outre la mise en forme de chaque doigt (320, 322) opposé de manière à donner aux canaux (318) une forme prédéterminée le long de la direction axiale.

3. Procédé de fabrication d'un moyeu de roue selon la revendication 1, dans lequel chaque doigt (320, 322) comprend un ou plusieurs segments linéaires (320a, 320b), et comprenant en outre la mise en forme d'au moins un segment linéaire de chaque doigt (320, 322) en une courbe, de sorte que les doigts (320, 322) opposés de chaque élément précurseur aient des pointes qui s'éloignent les unes des autres.

4. Procédé de fabrication d'un moyeu de roue selon la revendication 1, dans lequel la flexion forme une base (336) dans chaque élément précurseur (334) pour la fixation à l'organe annulaire (330).

5. Procédé de fabrication d'un moyeu de roue selon la revendication 4, dans lequel l'étape de fixation comprend le soudage de chaque base (336) à l'organe annulaire (330).

6. Procédé de fabrication d'un moyeu de roue selon la revendication 1, dans lequel l'étape de fixation comprend le soudage de la feuille (332) à l'organe annulaire (330).

7. Procédé de fabrication d'un moyeu de roue selon la revendication 1, comprenant en outre la fixation de l'organe annulaire (330) à une partie centrale (302) configurée pour une connexion à un essieu d'un véhicule.

8. Procédé de fabrication d'un moyeu de roue selon la revendication 1, dans lequel chaque doigt (320, 322) comprend une pluralité de segments linéaires.

9. Procédé de fabrication d'un moyeu de roue selon la revendication 1, dans lequel des paires adjacentes (340) de doigts (320, 322) opposés forment un creux (344) ayant une largeur circonférentielle qui augmente le long d'une direction radialement vers l'extérieur.

10. Procédé de fabrication d'un moyeu de roue selon la revendication 1, dans lequel chaque canal (318) a une largeur circonférentielle qui diminue le long d'une direction radialement vers l'extérieur.

11. Procédé de fabrication d'un moyeu de roue selon la revendication 1, dans lequel la feuille (332) de matériau comprend du métal.

12. Procédé de fabrication d'un moyeu de roue selon la revendication 1, dans lequel la feuille (332) de matériau a une largeur le long de la direction axiale qui est la même qu'une largeur le long de la direction axiale de l'organe annulaire.

13. Procédé de fabrication d'un moyeu de roue selon la revendication 1, dans lequel la fixation crée une pluralité de cavités (338) entre la feuille (332) de matériau et l'organe annulaire (330).

14. Procédé de fabrication d'un moyeu de roue selon la revendication 1, dans lequel l'organe annulaire (330) est de forme cylindrique.

15. Procédé de fabrication d'un moyeu de roue selon la revendication 1, dans lequel chaque canal (318) créé par la découpe est positionné avec un élément précurseur (334).
